# FASCICULE DE BREVET EUROPEEN

(11) **EP 0 409 744 B1**
(45) Date de publication et mention de la délivrance du brevet: **24.08.1994**
(21) Numéro de dépôt: 90420309.8
(22) Date de dépôt: 29.06.1990
(51) Int. Cl.: H01M 2/10

(54) **Boîtier pour piles électriques cylindriques de différents diamètres**
Behälter für elektrische, zylindrische Batterien mit verschiedenen Durchmessern
Case for electric cylindrical batteries of different diameters

(30) Priorité: 19.07.1989 FR 8909829
(43) Date de publication de la demande: 23.01.1991
(73) Titulaire: PETZL SA, F-38190 Crolles (FR)
(72) Inventeur: Petzl, Pierre, F-38330 St Ismier (FR); Petzl, Paul, F-38660 Le Touvet (FR)
(74) Mandataire: Hecké, Gérard

(56) Documents cités:
- FR-A- 2 499 319
- US-A- 2 357 274
- US-A- 4 232 260
- PATENT ABSTRACTS OF JAPAN, vol. 6, no. 91 (E-109)[969], 28 mai 1982;& JP-A-57 25 668 (SONY K.K.) 10-02-1982
- PATENT ABSTRACTS OF JAPAN, vol. 6, no. 60 (E-102)[938], 17 avril 1982;& JP-A-57 3367 (SONY K.K.) 08-01-1982
- PATENT ABSTRACTS OF JAPAN, vol. 7, no. 129 (E-179)[1274], 4 juin 1983;& JP-A-58 44 667 (MATSUSHITA DENKI SANGYO K.K.) 15-03-1983

## Description

L'invention est relative à un boîtier de logement d'une pluralité de piles électriques de formes cylindriques de mêmes longueurs et s'étendant parallèlement à l'intérieur du boîtier, lequel comporte une enveloppe isolante ayant deux grandes faces latérales opposées, et renfermant :
- deux séries de lames de contacts solidarisées à intervalles réguliers le long de deux grandes faces latérales opposées, en présentant des polarités alternées autorisant un couplage en série des piles lors de leur insertion dans l'enveloppe.
- chaque pile s'étendant perpendiculairement aux deux grandes faces latérales selon un axe longitudinal disposé en alignement avec deux lames de contacts correspondantes de polarités différentes.

Un boîtier électrique connu permet de recevoir au choix une pile plate, et plusieurs piles cylindriques. L'utilisation de piles cylindriques nécessite la mise en place d'un adaptateur spécial, étant donné que les lames de contacts sont différentes et distinctes selon le type de piles, plate ou cylindrique. L'utilisation d'une pile plate implique obligatoirement l'enlèvement de l'adaptateur. Ce dernier constitue un accessoire qui peut être perdu ou non disponible en cas de changement ou remplacement de piles.

Le document JP-A-573367 décrit un dispositif de support pour une pile pouvant avoir différentes dimensions. Le support est formé par plusieurs branches articulées, et reliées mécaniquement à un disque mobile en translation grâce à la coopération avec une vis de réglage solidaire d'un bouton de commande. La vis s'étend le long de l'axe de la pile. Ce dispositif de support n'est pas adapté pour un jeu de plusieurs piles disposées parallèlement.

Le document FR-A 2499 319 se rapporte à un boîtier à piles destiné à recevoir au choix des piles de diamètres différents. Le volume interne du boîtier s'adapte automatiquement à la dimension des piles grâce à la coopération d'un palpeur avec un organe de verrouillage d'un support ajustable. Le positionnement longitudinal de l'axe des piles n'est pas conservé selon le type de diamètre utilisé.

Le document JP-A 5844667 mentionne un boîtier à piles de longueurs différentes et de mêmes diamètres.

L'objet de l'invention consiste à réaliser un boîtier universel facilement convertible selon le diamètre des piles cylindriques utilisées.

Le boîtier renferme des moyens d'ajustage formés par deux entretoises mobiles susceptibles d'occuper une première position inactive ou une deuxième position active en fonction du diamètre des piles d'un premier et d'un deuxième jeux, le passage de la première position vers la deuxième position et vice versa, permettant de conserver le même positionnement de l'axe longitudinal des piles, indépendamment de leurs diamètres, et que chaque jeu comporte le même nombre de piles.

L'adaptation du boîtier au type de piles s'opère très facilement par la modification de position des moyens d'ajustage qui sont intégrés dans le boîtier.

Selon un premier mode de réalisation, les moyens d'ajustage comportent une paire d'entretoises montée à pivotement limité entre les première et deuxième positions, chaque entretoise ayant un axe d'articulation introduit à jeu dans au moins un orifice du boîtier.

Les entretoises sont animées de deux mouvements opposés de basculement, en étant disposés symétriquement par rapport au plan médian de trace, parallèle aux deux faces latérales de l'enveloppe, le passage de la première position vers la deuxième position, et vice versa, s'effectuant par un débattement angulaire à angle droit, dans lequel les entretoises se trouvent soit plaquées horizontalement contre le fond du boîtier dans la première position, soit positionnées verticalement en regard des dites faces latérales opposées dans la deuxième position.

Selon un deuxième mode de réalisation, les moyens d'ajustage comportent une paire d'entretoises semi-mobiles sollicitées en translation inverse par des ressorts de compression prenant appui sur les faces latérales opposées du boîtier, les entretoises étant écartées au maximum dans la première position, et rapprochées dans la deuxième position, respectivement lors de l'insertion de grosses piles et de petites piles de diamètre inférieur.

D'autres avantages et caractéristiques ressortiront plus clairement de la description qui va suivre de deux exemples de réalisation donnés à titre d'exemples non limitatifs, et représentés aux dessins annexés, dans lesquels :
- la figure 1 est une vue en plan du boîtier, la couvercle étant enlevé, ainsi que les piles ;
- les figures 2 et 3 représentent des vues en coupe selon les lignes 2-2 et 3-3 de la figure 1 pour l'utilisation de grosses piles ;
- les figures 4 et 5 sont des vues identiques à celles des figures 2 et 3, pour l'utilisation de petites piles ;
- les figures 6 et 7 montrent des vues identiques à celles des figures 2 et 4, pour une variante de réalisation.

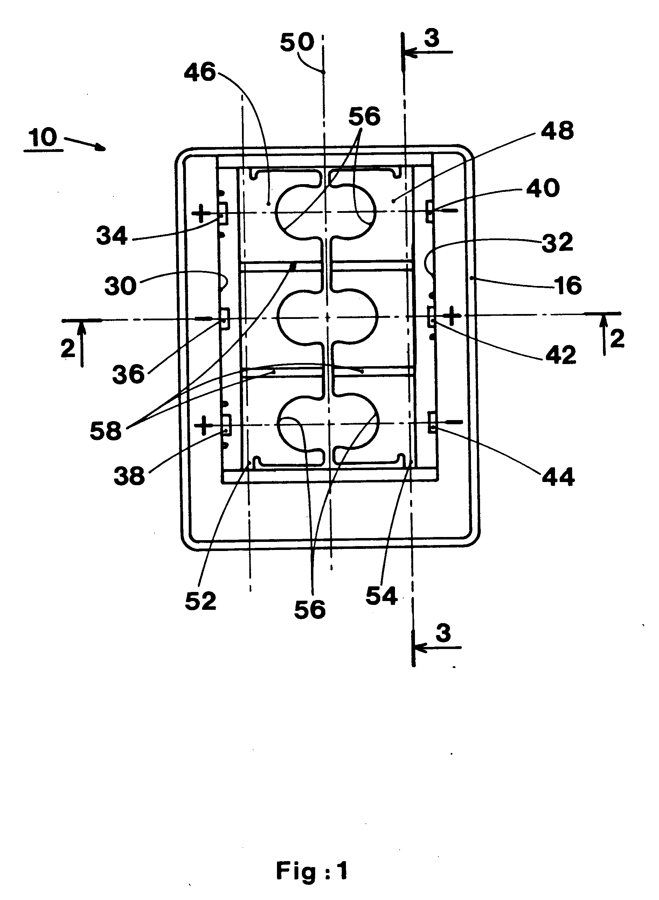

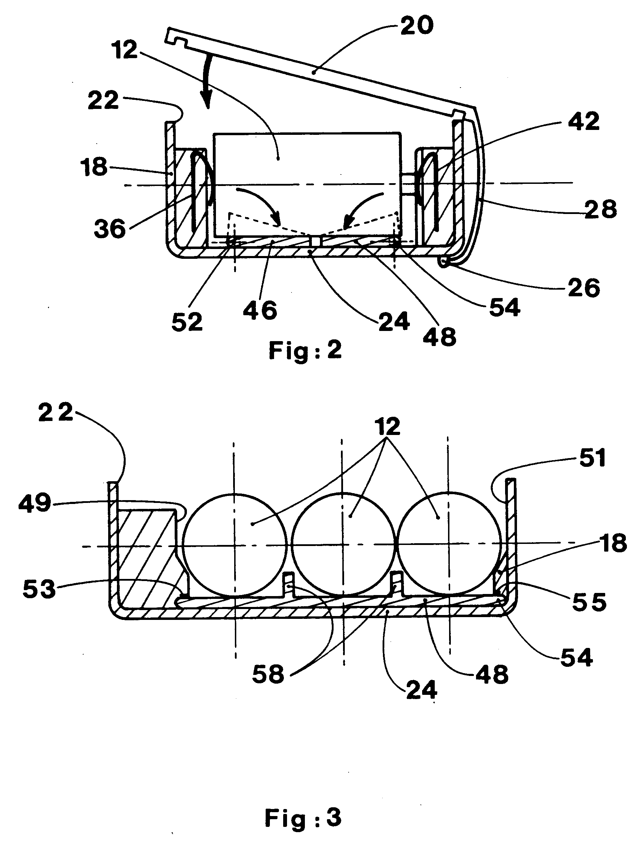

Sur les figures 1 à 5, un boîtier 10 parallélépipédique de logement d'une pluralité de piles électriques 12, 14 cylindriques comporte une enveloppe 16 réalisée en matériau isolant moulé. L'enveloppe 16 est composée d'un socle 18 de positionnement des piles 12, 14, et d'un couvercle 20 d'obturation destiné à s'adapter à l'orifice 22 supérieur du socle 18 à l'opposé du fond 24. Le couvercle 20 est relié à une attache 26 du fond 24 par un lien 28 souple jouant le rôle de charnière (voir figure 2).

Les deux grandes faces latérales 30, 32 opposées à l'intérieur de l'enveloppe 16 sont équipées de deux séries de lames de contacts 34, 36, 38 ; 40, 42, 44 fixes, de polarités alternées, de manière à autoriser le couplage en série des piles 12 ou 14 lors de leur insertion dans le socle 18.

Les lames de contacts 34 à 44 sont identiques et s'étendent perpendiculairement au fond 24, en présentant chacune une partie élastique déformable pour assurer une pression de contact prédéterminée avec les extrémités opposées des piles 12, 14 correspondantes. Chaque paire de lames de contact 42, 44 ; 34, 36 adjacentes sont interconnectées à leurs bases par une barrette de liaison (non représentée). Les deux autres lames de contact 38, 40 constituent les deux pôles positif et négatif de la source d'alimentation à courant continu, laquelle est susceptible d'alimenter une lampe d'éclairage (non représentée), notamment par l'intermédiaire d'un câble électrique. L'axe longitudinal de chaque pile 12, 14 est disposé en alignement avec deux lames de contact 34,40 ; 36,42 ; 38,44 de polarités différentes.

A l'intérieur de l'enveloppe 16 se trouve une paire d'entretoises 46, 48 de positionnement, agencées symétriquement par rapport au plan médian de trace 50 parallèle aux grandes faces latérales 30, 32. La base de chaque entretoise 46, 48 est équipée d'un axe 52, 54 d'articulation introduit à jeu dans des paliers alignés 53, 55 ménagés dans les petites faces latérales 49, 51 opposées du socle 18. Les deux axes 52, 54 s'étendent parallèlement et au voisinage des grandes faces latérales 30, 32.

Chaque entretoise 46, 48 peut occuper une première position inactive abaissée, et une deuxième position active relevée, en fonction du diamètre des piles 12, 14 utilisées. Le passage des entretoises 46, 48 de la première position vers la deuxième position, et vice versa, nécessite deux mouvements opposés de basculement à angle droit autour des axes 52, 54.

Dans la première position inactive, les entretoises 46, 48 sont plaquées horizontalement contre le fond 24 du socle 18 (fig. 1), pour autoriser l'insertion de trois grosses piles 12 (fig. 2 et 3) entre les paires de lames de contacts alignées 34,40 ; 36,42 ; 38,44 de polarités opposées.

Chaque entretoise 46, 48 comporte des encoches 56 de réception ayant des formes semi-cylindriques, dont le diamètre correspond sensiblement à celui des petites piles 14. L'une des faces de chaque entretoise 46, 48 est pourvue de nervures 58 latérales saillantes, imbriquées entre les encoches 56 successives.

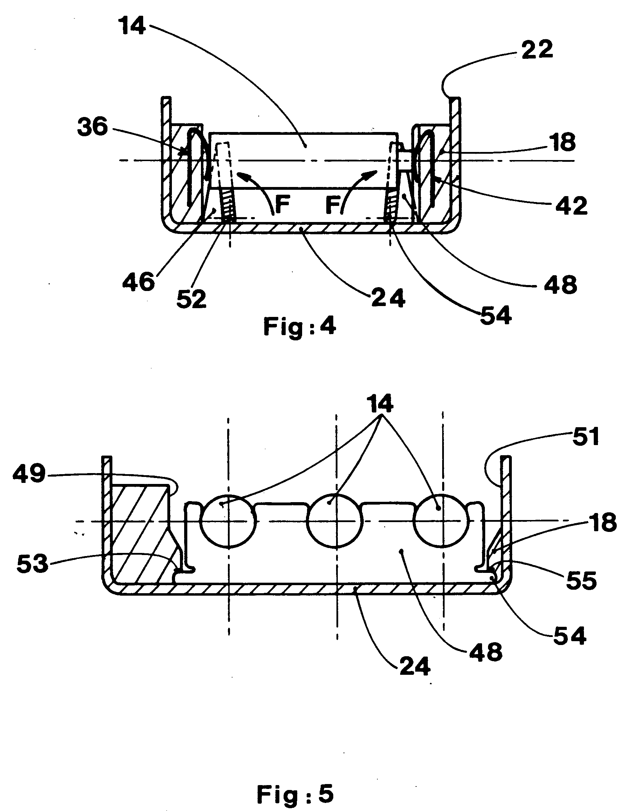

Le basculement des entretoises 46, 48 vers la deuxième position active (voir flèche F, fig. 4) les amène en regard des grandes faces latérales 30, 32 internes, avec interposition d'un écartement latéral prédéterminé, dû à la présence des nervures 58. Les entretoises 46, 48 s'étendent alors selon une direction perpendiculaire au fond 24, pour permettre l'introduction dans les encoches 56 de petites piles 14 (fig. 4 et 5), lesquelles présentent chacune une longueur identique à celle des grosses piles 12, mais un diamètre inférieur.

La profondeur des encoches 56 dans les entretoises 46, 48 est choisie de manière à conserver la position de l'axe longitudinal des petites piles 14 (fig. 4 et 5) par rapport à celle des grosses piles 12 (fig. 2 et 3). Il en résulte un bon contact électrique des piles 12, 14 avec les lames de contacts fixes correspondantes 34, 40 ; 36, 42 ; 38, 44, dans les première et deuxième positions des entretoises 46, 48.

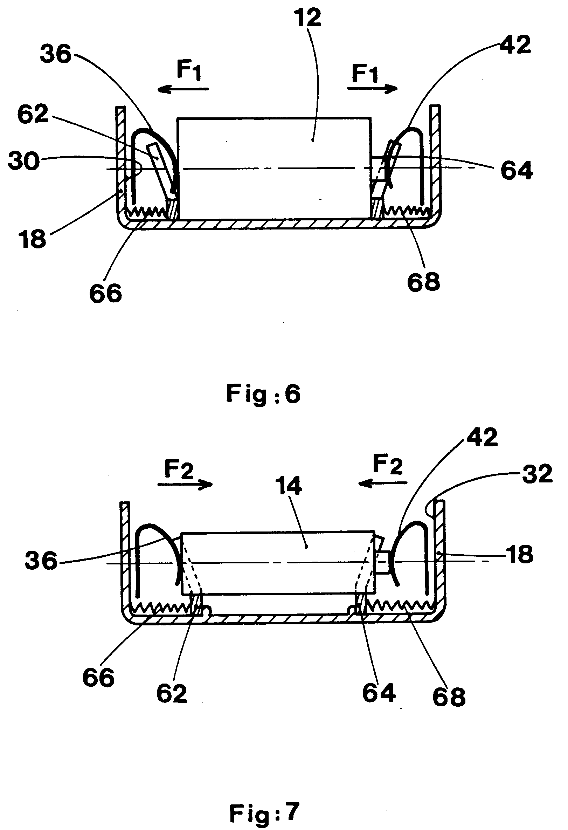

Selon la variante des figures 6 et 7, les piles 12, 14 sont positionnées par deux entretoises semi-mobiles 62, 64 sollicitées en translation inverse par des ressorts de compression 66, 68 prenant appui sur les faces latérales opposées 30, 32. Dans la première position (figure 6), les entretoises 62, 64 sont écartées au maximum selon les sens opposés des flèches F1 lors de l'insertion des grosses piles 12. Dans la deuxième position (figure 7), les petites piles 14 sont positionnées sur des rampes inclinées divergentes des entretoises 62, 64. Il en résulte un mouvement de rapprochement automatique des entretoises 62, 64 selon les sens des flèches F2 par l'action de détente élastique des ressorts 66, 68.

## Revendications

1. Boîtier de logement d'une pluralité de piles électriques 12,14 de formes cylindriques de mêmes longueurs et s'étendant parallèlement à l'intérieur du boîtier 10, lequel comporte une enveloppe 16 isolante ayant deux grandes faces latérales 30,32 opposées, et renfermant :
- deux séries de lames de contacts 34,36,38 ; 40,42,44 solidarisées à intervalles réguliers le long de deux grandes faces latérales 30,32 opposées, en présentant des polarités alternées autorisant un couplage en série des piles 12,14 lors de leur insertion dans l'enveloppe 16,
- chaque pile 12,14 s'étendant perpendiculairement aux deux grandes faces latérales 30,32 selon un axe longitudinal disposé en alignement avec deux lames de contacts 34,40 ; 36,42 ; 38,44 correspondantes de polarités différentes, caractérisé en ce que le boîtier 10 renferme des moyens d'ajustage 46,48 ; 62,64 formés par deux entretoises mobiles susceptibles d'occuper une première position inactive ou une deuxième position active en fonction du diamètre des piles 12,14 d'un premier et d'un deuxième jeux, le passage de la première position vers la deuxième position et vice versa, permettant de conserver le même positionnement de l'axe longitudinal des piles 12,14, indépendamment de leurs diamètres, et que chaque jeu comporte le même nombre de piles.

2. Boîtier selon la revendication 1, caractérisé en ce que la paire d'entretoises 46,48 des moyens d'ajustage est montée à pivotement limité entre les première et deuxième positions, chaque entretoise 46,48 ayant un axe 52,54 d'articulation introduit à jeu dans au moins un orifice 53,55 du boîtier 10.

3. Boîtier selon la revendication 2, caractérisé en ce que les entretoises 46, 48 sont animées de deux mouvements opposés de basculement, en étant disposés symétriquement par rapport au plan médian de trace 50, parallèle aux deux faces latérales 30,32 de l'enveloppe 16, le passage de la première position vers la deuxième position, et vice versa, s'effectuant par un débattement angulaire à angle droit, dans lequel les entretoises 46,48 se trouvent soit plaquées horizontalement contre le fond 24 du boîtier 10 dans la première position, soit positionnées verticalement dans la deuxième position en regard des dites faces latérales 30, 32 opposées.

4. Boîtier selon la revendication 3, caractérisé en ce que chaque entretoise 46,48 comporte des encoches 56 de réception semi-cylindriques ayant chacune un diamètre correspondant sensiblement à celui des petites piles 14 du deuxième jeu, le nombre d'encoches 56 d'une entretoise étant identique à celui des piles 14 contenues dans le boîtier 10.

5. Boîtier selon la revendication 3 ou 4, caractérisé en ce que chaque entretoise 46,48 est dotée de nervures 58 saillantes agencées pour ménager dans ladite deuxième position, un écartement latéral prédéterminé par rapport aux faces latérales 30,32.

6. Boîtier selon la revendication 1, caractérisé en ce que les moyens d'ajustage comportent une paire d'entretoises 62,64 déplaçables en translation inverse par l'action de ressorts de compression 66,68 prenant appui sur les faces latérales 30,32 opposées du boîtier 10, les entretoises 62,64 étant écartées au maximum dans la première position, et rapprochées dans la deuxième position, respectivement lors de l'insertion des piles du premier et du deuxième jeux.

7. Boîtier selon la revendication 6, caractérisé en ce que chaque entretoise 62,64 est pourvue d'une rampe inclinée pour le positionnement des piles 14 de diamètre inférieur du deuxième jeu.

## Patentansprüche

1. Behälter zur Aufnahme einer Vielzahl elektrischer, zylindrischer Batterien (12, 14) gleicher Längen, die sich parallel zueinander im Inneren des Behälters (10) erstrecken, welcher eine isolierende Hülle (16) mit zwei großen sich gegenüberliegenden Seitenwänden (30, 32) aufweist, die umschließt:
- zwei Reihen von Kontaktfedern (34, 36, 38; 40, 42, 44), die in regelmäßigen Abständen entlang der beiden großen Seitenwände fest mit diesen verbunden sind, wobei sie abwechselnde Polaritäten aufweisen, wodurch eine Serienschaltung der Batterien bei ihrem Einsetzen in die Hülle (16) ermöglicht wird,
- wobei sich jede Batterie (12, 14) senkrecht zu den beiden großen Seitenwänden (30, 32) erstreckt, entlang einer Längsachse, die in Ausrichtung zu zwei Kontaktfedern (34, 40; 36, 42; 38, 44) angeordnet ist, entsprechend den unterschiedlichen Polaritäten,
dadurch gekennzeichnet, daß das Gehäuse (10) eine Justieranordnung (46, 48; 62, 64) umschließt, die aus zwei beweglichen Streben besteht, die entweder eine erste, inaktive Stellung oder eine zweite, aktive Stellung als Funktion des Durchmessers der Batterien (12, 14) eines ersten bzw. eines zweiten Satzes einnehmen können, wobei der Übergang von der ersten Stellung in die zweite Stellung und umgekehrt eine Beibehaltung der Lage der Längsachse der Batterien (12, 14) ermöglicht, unabhängig von ihren Durchmessern und daß jeder Satz die gleiche Anzahl von Batterien aufweist.

2. Behälter nach Anspruch 1, dadurch gekennzeichnet, daß das Paar Streben (46, 48) der Justieranordnung begrenzt schwenkbar zwischen der ersten Stellung und der zweiten Stellung angeordnet ist, wobei jede Strebe (46, 48) eine Gelenkachse (52, 54) aufweist, die mit Spiel in wenigstens eine Öffnung (53, 55) des Gehäuses (10) eingreift.

3. Behälter nach Anspruch 2, dadurch gekennzeichnet, daß die Streben (46, 48) zwei entgegengesetzte Schwenkbewegungen ausführen und symmetrisch zur Mittenebene (50), die parallel zu den Seitenwänden (30, 32) der Hülle (16) verläuft, angeordnet sind, wobei der Übergang von der ersten Stellung in die zweite Stellung und umgekehrt durch ein Umklappen um einen rechten Winkel erfolgt, bei dem die Streben (46, 48) entweder waagrecht am Boden (24) des Behälters (10) in der ersten Stellung anliegen, oder senkrecht gegenüber den sich gegenüberliegenden Seitenwänden (30, 32) in der zweiten Stellung angeordnet sind.

4. Behälter nach Asnpruch 3, dadurch gekennzeichnet, daß jede Strebe (46, 48) halbzylindrische Aufnahmeaussparungen (56) aufweist, deren jede einen Durchmesser besitzt, der im wesentlichen derjenigen der dünnen Batterien (14) des zweiten Satzes entspricht, wobei die Anzahl der Aussparungen (56) einer Strebe identisch mit derjenigen der im Behälter (10) enthaltenen Batterien (14) ist.

5. Behäler nach Anspruch 3 oder 4, dadurch gekennzeichnet, daß jede Strebe (46, 48) mit hervorspringenden Rippen (58) versehen ist, die so ausgestaltet sind, daß sie in der zweiten Stellung einen seitlichen vorgegebenen Abstand zu den Seitenwänden (30, 32) bedingen.

6. Behälter nach Anspruch 1, dadurch gekennzeichnet, daß die Justieranordnung ein Paar Streben (62, 64) aufweist, die in entgegengesetzter Richtung durch die Wirkung von Druckfedern (66, 68) verschiebbar sind, die sich auf den sich gegenüberliegenden Seitenwänden (30, 32) im Behälter (10) abstützen, wobei die Streben (62, 64) den größtmöglichen Abstand voneinander in der ersten Stellung aufweisen und die größtmögliche Annäherung aneinander in der zweiten Stellung aufweisen, während des Einsetzens der Batterien des ersten bzw. des zweiten Satzes.

7. Gehäuse nach Anspruch 6, dadurch gekennzeichnet, daß jede Strebe (62, 64) mit einer geneigten Kante zum Einsetzen der Batterien (14) kleineren Durchmessers des zweiten Satzes versehen ist.

## Claims

1. A casing housing a plurality of cylindrical-shaped electrical batteries 12, 14 of the same length,and extending in a parallel direction inside the casing, which comprises an insulating enclosure 16 having two opposite large side faces 30, 32, and containing:
- two series of contact blades 34, 36, 38; 40, 42, 44 securedly fixed at regular intervals along two opposite large side faces 30, 32, and presenting alternate polarities enabling the batteries 12, 14 to be coupled in series when the latter are inserted in the enclosure 16,
each battery 12, 14 extending perpendicularly to the two large side faces 30, 32 according to a longitudinal axis disposed in alignment with two corresponding contact blades 34, 40; 36, 42; 38, 44 of different polarities,
characterized in that the casing 10 includes adjustment means 46, 48, 62, 64 comprising two movable spacers which may occupy a first inactive position or a second active position depending on the diameter of the batteries 12, 14 of a first and second sets, the movement from the first position to the second position, and vice-versa, enabling the same positioning of the longitudinal axis of the batteries 12, 14 to be kept, regardless of their diameter,and that each set comprises the same number of batteries.

2. The casing according to claim 1, characterized in that the pair of spacers of the adjustment means is mounted with limited pivoting between the first and second positions, each spacer 46, 48 having an articulation spindle 52, 54 inserted with clearance in at least one orifice 53, 55 of the casing 10.

3. The casing according to claim 2, characterized in that the spacers 46, 48 are animated with two opposed pivoting movements, being located symmetrically with respect to the trace mid-plane 50, parallel to the two side faces 30, 32 of the enclosure 16, the movement from the first position to the second position, and vice-versa, being achieved by an angular movement at right-angles, in which the spacers 46, 48 are either flattened horizontally against the base-plate 24 of the casing 10 in the first position, or positioned vertically facing said opposite side faces 30, 32 in the second position.

4. The casing according to claim 3, characterized in that each spacer 46, 48 comprises semi-cylindrical housing notches 56 each having a diameter corresponding appreciably to that of the small batteries 14 of the second set, the number of notches 56 of a spacer being identical to that of the batteries 14 contained in the casing 10.

5. The casing according to claim 3 or 4, characterized in that each spacer 46, 48 is provided with salient ribs 58 arranged to provide a predetermined lateral separation with respect to the side faces 30, 32 in said second position.

6. The casing according to claim 1, characterized in that the adjustment means comprise a pair of semi-mobile spacers 62, 64 urged in reverse translation by compression springs 66, 68 bearing on the opposite side faces 30, 32 of the casing 10, the spacers 62, 64 being the maximum distance apart in the first position, and moved towards each other in the second position, respectively when the batteries of the first and second sets are inserted.

7. The casing according to claim 6, characterized in that each spacer 62, 64 is provided with an inclined ramp for positioning the batteries 14 of smaller diameter of the second set.
